# EUROPÄISCHE PATENTSCHRIFT

(11) **EP 3 387 509 B1**
(45) Veröffentlichungstag und Bekanntmachung des Hinweises auf die Patenterteilung: **07.08.2019**
(21) Anmeldenummer: 16805724.8
(22) Anmeldetag: 25.11.2016
(51) Int. Cl.: G06F 1/16, A45C 11/00

(54) **GEHÄUSE FÜR EIN ELEKTRONISCHES GERÄT**
HOUSING FOR AN ELECTRONIC DEVICE
BOÎTIER POUR UN APPAREIL ÉLECTRONIQUE

(30) Priorität: 07.12.2015 DE 102015015707
(43) Veröffentlichungstag der Anmeldung: 17.10.2018
(73) Patentinhaber: Testo SE & Co. KGaA, 79853 Lenzkirch (DE)
(72) Erfinder: DERR, Andreas, 78166 Donaueschingen (DE)
(74) Vertreter: Mertzlufft-Paufler, Cornelius
(86) Internationale Anmeldenummer: PCT/EP2016/001991
(87) Internationale Veröffentlichungsnummer: WO 2017/097402

(56) Entgegenhaltungen:
- DE-A1- 10 061 893
- US-A1- 2009 009 945
- US-A1- 2014 184 042
- US-A1- 2015 237 743

## Beschreibung

Die Erfindung betrifft ein Gehäuse für ein elektronisches Gerät, mit zwei Gehäuseschalen, wobei eine erste Gehäuseschale als eine Unterschale und eine zweite Gehäuseschale als eine auf die Unterschale aufsetzbare Oberschale ausgebildet sind, wobei in der Oberschale ein mit einer Displayschutzfolie verschlossene Sicht- und/oder Betätigungsfenster ausgebildet ist und wobei eine Verbindung zwischen den Gehäuseschalen durch eine umlaufende Dichtung abgedichtet ist. US 2014/184042 A1 und US 2009/009945 A1 offenbaren solche Gehäuse.

Derartige Gehäuse sind bekannt, um beispielsweise Tablets, Smartphones oder dergleichen elektronische Geräte aufzunehmen und gegen Umwelteinflüsse, insbesondere gegen Spritzwasser, zu schützen.

Hierbei ist es üblich geworden, für die unterschiedlichen im Handel erhältlichen Smartphone- und Tabletformen jeweils ein individuell angepasstes Gehäuse zu fertigen. Da die Gehäuse aus Kunststoff in Spritzgusstechnik hergestellt sind, ist hierzu die Anfertigung jeweils eines gesonderten Spritzgießwerkzeugs erforderlich. US2015/237743 A1 offenbart eine Anzeigevorrichtung, umfassend: eine Basis, die einen Montagerahmen umfasst, wobei der Montagerahmen mehrere geneigte Flächen aufweist; eine Anzeigeanordnung, die eine Anzeigetafel und eine Vielzahl von Seitenflächen umfasst, die mit der Anzeigetafel verbunden sind; und ein Dichtungselement, das die Anzeigetafel zumindest teilweise umgibt und an der Vielzahl von Seitenflächen angebracht ist, wobei das Dichtungselement zwischen einem Bildschirm und dem Montagerahmen angeordnet ist, wobei die mehreren geneigten Flächen an dem Dichtungselement anliegen um Lücken zwischen Bildschirm und Einbaurahmen abzudichten, wobei das Dichtungselement ein erstes Dichtungsstück, ein zweites Dichtungsstück, ein drittes Dichtungsstück und ein viertes Dichtungsstück umfasst.

Die Erfindung beschäftigt sich damit, den Fertigungsaufwand für ein derartiges Gehäuse zu vereinfachen.

Zur Lösung dieser Aufgabe sind erfindungsgemäß die Merkmale des Anspruchs 1 vorgesehen. Somit ist zur Lösung der genannten Aufgabe erfindungsgemäß bei einem Gehäuse der eingangs beschriebenen Art vorgesehen, dass die Dichtung aus wenigstens zwei voneinander separaten Dichtungssegmenten zusammengesetzt ist, die in einer Verlaufsrichtung der umlaufenden Dichtung aneinander gesetzt sind. Von Vorteil ist dabei, dass eine Änderung von Höhe und Breite eines derartigen Gehäuses zur Aufnahme eines anderen Typs eines Smartphones oder Tablets einfach an den Werkzeugen zur Herstellung der Dichtung realisierbar ist. Denn die Trennlinien oder Trennstellen, an denen die Dichtungssegmente zusammengesetzt sind, bieten in einfacher Weise die Möglichkeit einer Anpassung an eine geänderte Dimension des Gehäuses, ohne dass die Spritzgießwerkzeuge für die Dichtung im Übrigen geändert werden müssen.

Besonders günstig ist es dabei, wenn die umlaufende Dichtung Kanten eines Rechtecks beschreibt. Auf diese Weise kann erreicht werden, dass Änderungen in der Höhe oder Breite des Gehäuses zur Anpassung an einen neuen Tablettyp einfach realisierbar sind. Hierbei bezeichnet die Anpassung eines Gehäuses an einen Tablettyp die Änderung der zugehörigen Herstellungswerkzeuge, damit ein neu hergestelltes Gehäuse zu einem neuen Typ eines elektronischen Geräts passt und dieses passend in sich aufnehmen kann.

Bei einer Ausgestaltung der Erfindung kann vorgesehen sein, dass an wenigstens einem Dichtungssegment eine Auflagematte zur Fixierung eines eingelegten elektronischen Geräts in einer durch das Sicht- und/oder Betätigungsfenster vorgegebenen Betätigungsrichtung ausgebildet ist. Von Vorteil ist dabei, dass ein stoßsicheres Aufnehmen des elektronischen Geräts im Gehäuse möglich ist und/oder ein ungewolltes Verschieben des elektronischen Geräts im Gehäuse vermeidbar ist.

Besonders günstig ist es, wenn an wenigstens zwei Dichtungssegmenten übereinstimmende Auflagematten ausgebildet sind. Von Vorteil ist dabei, dass die zwei Dichtungssegmente mit demselben Formwerkzeug fertigbar sind, wobei nur geringfügige Modifikationen insbesondere bezüglich der Länge erforderlich sind, um das jeweilige Dichtungssegment zu fertigen.

Bei einer Ausgestaltung der Erfindung kann vorgesehen sein, dass die wenigstens zwei Dichtungssegmente jeweils an einem Ende einen Abschnitt mit gleichbleibendem Querschnitt aufweisen. Von Vorteil ist dabei, dass eine Längenänderung der Dichtungssegmente bei einer Anpassung des zu fertigenden Gehäuses an eine neue Breite und/oder eine neue Höhe einfach durch entsprechendes Ablängen in diesem Abschnitt erreichbar ist. Dies ist besonders einfach mit einem vorhandenen Formwerkzeug realisierbar.

Allgemein kann gesagt werden, dass die Dichtungssegmente jeweils einen Abschnitt der umlaufenden Dichtung, insbesondere somit einen Ringabschnitt, bilden können. Die bevorzugte Ausführungsform sieht demnach vier Dichtungssegmente vor, die jeweils eine Kante eines rechteckförmigen Rings definieren.

Besonders günstig ist es, wenn eine Auflagematte, insbesondere die bereits erwähnte Auflage, an einem dem Abschnitt mit gleichbleibendem Querschnitt gegenüberliegenden Ende jedes Dichtungssegmentes ausgebildet ist. Von Vorteil ist dabei, dass eine linienförmige Erstreckung des Dichtungssegments erreichbar ist, so dass ein kurzer Entformungsweg quer zur Verlaufsrichtung des Dichtungssegments erreichbar ist.

Bei einer Ausgestaltung der Erfindung kann vorgesehen sein, dass die Dichtung eine umlaufende Dichtlippe und eine umlaufende Dichtfläche aufweist. Von Vorteil ist dabei, dass die Gehäuseschalen separat abdichtbar sind. Auf diese Weise ist ein einfaches Zusammenstecken des Gehäuses erreichbar, wobei hohe Schutzklassen in Bezug auf Umwelteinflüsse wie Spritzwasser, beispielsweise IP65, erreichbar sind. Besonders günstig ist es dabei, wenn die Dichtlippe und die Dichtfläche durch eine umlaufende Nut voneinander getrennt sind. Auf diese Weise ist ein Abziehen einer Gehäuseschale von der Dichtlippe einfach ausführbar, bei welchem die andere Gehäuseschale an der Dichtfläche verbleibt, so dass die umlaufende Dichtung definiert in einer der beiden Gehäuseschalen verbleibt. Alternativ oder zusätzlich kann hierbei vorgesehen sein, dass die Dichtung quer zu einer Zusammensetzrichtung der Gehäuseschalen abdichtet. Von Vorteil ist dabei, dass eine Beaufschlagung der Gehäuseschalen mit Druck in Zusammensetzrichtung zur Erreichung der Abdichtung nicht erforderlich ist. Dies erleichtert eine einfache Montage zur Erreichung einer hohen Schutzklasse. Hierbei oder alternativ kann vorgesehen sein, dass die Dichtung an einer quer zu einer Zusammensetzrichtung, beispielsweise der bereits erwähnten Zusammensetzrichtung, orientierten Anlagefläche wenigstens einer Gehäuseschale, vorzugsweise beider Gehäuseschalen, anliegt. Auf diese Weise ist erreichbar, dass die Dichtung nicht in Richtung der Zusammensetzrichtung, sondern quer hierzu ausgebildet ist, so dass sich die Dichtung durch ein Überschieben der Gehäuseschalen quer zur Dichtrichtung ergibt. Besonders günstig ist es, wenn die Dichtlippe und/oder die Dichtfläche quer zu der Zusammensetzrichtung abdichten und/oder an einer quer zu der Zusammensetzrichtung orientierten Anlagenfläche anliegen.

Es wird bei einem Gehäuse gemäß der Erfindung zusätzlich zur Lösung der genannten Aufgabe vorgeschlagen, dass wenigstens eine Gehäuseschale hinterschnittfrei ausgebildet ist. Diese Ausgestaltung ist möglicherweise von eigenständiger erfinderischer Qualität, kann jedoch bevorzugt mit den vorangehend beschriebenen Ausgestaltungen kombiniert werden. Von Vorteil ist bei dieser Lösung, dass ein Formwerkzeug für die wenigstens eine Gehäuseschale mit relativ geringem Aufwand fertigbar ist, da insbesondere Schieber zur Herstellung von Hinterschnitten verzichtbar sind. Bevorzugt ist vorgesehen, dass sowohl die Unterschale als auch die Oberschale hinterschnittfrei ausgebildet sind.

Die Erfindung kann dies beispielsweise dadurch erreichen, dass die erforderlichen Hinterschnitte für Zugangsöffnungen an der Dichtung ausgebildet sind. Durch die bevorzugt linienförmige Ausgestaltung der Dichtsegmente können diese aufwendigen Strukturen in den zugehörigen Formwerkzeugen durch Verschieben entsprechender Einsätze einfach erreichbar sein.

Bevorzugt ist vorgesehen, dass die Oberschale in Bezug auf eine durch das Sicht- und/oder Betätigungsfenster vorgegebene Entformungsrichtung hinterschnittfrei ausgebildet ist. Von Vorteil ist dabei, dass ein Formwerkzeug quer zu der zweidimensionalen Erstreckung der Oberschale entformbar ist, so dass kurze Entformungswege erreichbar sind.

Alternativ oder zusätzlich kann vorgesehen sein, dass die Unterschale in Bezug auf eine durch einen rückseitigen Boden vorgegebene Entformungsrichtung hinterschnittfrei ausgebildet ist. Von Vorteil ist dabei, dass die Entformungsrichtung für die Unterschale quer zu dem rückseitigen Boden der Unterschale erreichbar ist, so dass die Entformungsrichtung quer zu einer im wesentlichen zweidimensionalen Erstreckung der Unterschale einrichtbar ist, woraus sich kurze Entformungswege ergeben.

Bei einer Ausgestaltung der Erfindung kann vorgesehen sein, dass die Dichtungsegmente jeweils mehrkomponentig mit einer Hartkomponente und einer Weichkomponente ausgebildet sind. Von Vorteil ist dabei, dass durch die Hartkomponente eine Formstabilisierung der Dichtung erreichbar ist, während durch die Weichkomponente ein hoher Grad an Abdichtung erreichbar ist. Bevorzugt ist vorgesehen, dass sowohl die Hartkomponente als auch die Weichkomponente der zusammengesetzten Dichtsegmente einen umlaufenden Ring bilden.

Bei einer Ausgestaltung der Erfindung kann vorgesehen sein, dass wenigstens ein Dichtungselement eine ringförmige Schnittstellen- und/oder Betätigungsöffnung bildet. Bevorzugt ist diese Schnittstellen- und/oder Betätigungsöffnung quer zu einer Zusammensetzrichtung der Gehäuseschalen ausgerichtet und ermöglicht den Zugang zu Schnittstellen und/oder Betätigungselementen, welche typischerweise an einem an einem Rand eines eingelegten elektronischen Gerät zwischen einer Vorderseite und einer Rückseite ausgebildet sind. Von Vorteil ist bei dieser Lösung, dass die Schnittstellen- und/oder Betätigungsöffnung, die bei vorbekannten Gehäusen typischerweise an den Schalen mitausgebildet werden, in die Dichtung verlagert sind, so dass die hierfür erforderlichen Hinterschnitte nicht an den Gehäuseschalen ausgebildet werden müssen. Bevorzugt weist wenigstens eine der Gehäuseschalen, insbesondere beide der Gehäuseschalen, eine korrespondierende Ausnehmung auf, welche die Schnittstellen und/oder Betätigungsöffnung bevorzugt in Zusammensetzrichtung aufnimmt.

Bei einer Ausgestaltung der Erfindung kann vorgesehen sein, dass die jeweiligen Hartkomponenten von aneinander gesetzten Dichtsegmenten in der Verlaufsrichtung überlappend ausgebildet sind. Auf diese Weise kann ein vollständig geschlossener umlaufender Ring aus der Hartkomponente gebildet werden, wodurch sich eine hohe Formstabilität der Dichtung ergibt.

Bei einer Ausgestaltung der Erfindung kann alternativ oder zusätzlich hierzu vorgesehen sein, dass die Weichkomponenten von aneinander gesetzten Dichtungssegmenten in der Verlaufsrichtung der Dichtung aneinanderstoßend ausgebildet sind. Dies ermöglicht einen dichten Abschluss eines umlaufenden Rings aus Weichkomponenten, wobei eine aufnehmende Nut in der Gehäuseschale für die Dichtung mit einer konstanten Nutbreite ausbildbar ist.

Gemäß einer Ausgestaltung wird vorgeschlagen, dass die Gehäuseschalen mit wenigstens einer aufclipsbaren Klammer zusammengehalten sind. Von Vorteil ist dabei, dass aufwendige Klappmechanismen, die eine aufwendige Gestaltung der zugehörigen Formwerkzeuge erzwingen würden, für die Gehäuseschalen verzichtbar sind. Insbesondere ist auf diese Weise einfach erreichbar, dass die Gehäuseschalen hinterschnittfrei ausbildbar sind. Diese Ausgestaltung ist daher bevorzugt mit dem bereits beschriebenen Aspekten kombinierbar, um somit eine besonders einfache Fertigung des Gehäuses zu ermöglichen.

Bei einer Ausgestaltung der Erfindung kann vorgesehen sein, dass die Klammer U- oder C-förmig ausgebildet ist. Von Vorteil ist dabei, dass ein Aufclipsen besonders einfach ausführbar ist. Das Aufclipsen ist als Verbindungstechnik im Stand der Technik bekannt und kann beispielsweise dadurch charakterisiert werden, dass die aufzuclipsende Klammer während des Aufclipsvorgangs elastisch deformiert wird und anschließend an den Gehäuseschalen form- und/oder kraftschlüssig hält.

Besonders günstig ist es dabei, wenn die Klammer an wenigstens einem freien Ende eine ins Innere der bereits beschriebenen U- und/oder C-Form abtragende Rastnase aufweist. Dies ermöglicht einen sicheren formschlüssigen Halt. Ein besonders sicherer Halt ist erreichbar, wenn die Klammer an zwei freien Enden jeweils eine ins Innere der U- und/oder C-Form abragende Rastnase aufweist.

Hierbei kann vorgesehen sein, dass an wenigstens einer der Gehäuseschalen, insbesondere an beiden Gehäuseschalen, eine beziehungsweise jeweils eine zu einer Rastnase, insbesondere der bereits erwähnten Rastnase, korrespondierende Rastnut ausgebildet ist. Dies ermöglicht ein definiertes Einrasten der Klammer beim Aufclipsen.

Bei einer Ausgestaltung der Erfindung kann vorgesehen sein, dass an der Klammer ein von den Gehäuseschalen in Gebrauchsposition abstehender Funktionsaufbau ausgebildet ist. Von Vorteil ist dabei, dass die Klammer wegen ihrer Haltefunktion noch weitere Funktionen, insbesondere eine Tragefunktion mit Hilfe einer Trageöse als Funktionsaufbau und/oder eine Befestigungsfunktion bei einer Ausbildung des Funktionsaufbau als Befestigungsvorrichtung für ein stabförmiges Instrument, ausüben oder übernehmen kann. Besonders günstig ist es, wenn das stabförmige Instrument ein Messfühler ist, der beispielsweise an ein in dem Gehäuse aufgenommenes elektronisches Gerät angeschlossen ist. Von Vorteil ist dabei, dass unterschiedliche Klammern mit unterschiedlichen Funktionsaufbauten wahlweise zum Verbinden der Gehäuseschalen verwendbar sind.

Bei einer Ausgestaltung der Erfindung kann vorgesehen sein, dass an wenigstens einer der zwei Gehäuseschalen, bevorzugt an beiden Gehäuseschalen, wenigstens zwei identische Befestigungsstellen für jeweils eine Klammer ausgebildet sind. Von Vorteil ist dabei, dass die Klammer wahlweise an einer der Befestigungsstellen befestigbar ist. Somit lassen sich die bereits erwähnten Funktionsaufbauten an unterschiedlichen Stellen des Gehäuses einfach realisieren. Auch können so zwei Klammern mit unterschiedlichen Funktionsaufbauten gegeneinander ausgetauscht werden.

Hierbei kann demnach vorgesehen sein, dass zwei Klammern zum Zusammenhalten der Gehäuseschalen vorhanden sind, die voneinander abweichende Funktionsaufbauten aufweisen und die auf einer die Gehäuseschalen kontaktierenden Clipseite übereinstimmend ausgebildet sind. Somit ist erreichbar, dass die Klammern auf dieselbe Befestigungsstelle passen und somit gegeneinander austauschbar sind. Der Benutzer kann daher selbst entscheiden, an welcher Befestigungsstelle er unterschiedliche Funktionsaufbauten anordnen möchte. Insbesondere ist beispielsweise möglich, Trageösen je nach Gebrauch als Linkshänder oder Rechtshänder an den Gehäuseschalen auszubilden. Auch die erwähnten Befestigungsvorrichtungen können so einfach für Linkshänder und Rechtshänder jeweils passend umgesetzt werden.

Eine Ausgestaltung sieht demnach einen Baukasten für ein erfindungsgemäßes Gehäuse, insbesondere wie zuvor beschrieben und/oder nach Anspruch 1, vor, bei welchem wenigstens zwei Klammern zum Zusammenhalten der Gehäuseschale vorhanden sind, die voneinander abweichende Funktionseinheiten aufweisen und die auf einer die Gehäuseschalen kontaktierenden Clipsseite übereinstimmend ausgebildet sind. Ein wahlweises Ersetzen von Klammern unterschiedlicher Funktionseinheiten gegeneinander und/oder ein Umsetzen der Klammern mit unterschiedlichen Funktionseinheiten zwischen unterschiedlichen Befestigungsstellen eines Gehäuses sind somit einfach erreichbar.

Die Erfindung wird nun anhand von Ausführungsbeispielen näher beschrieben, ist jedoch nicht auf diese Ausführungsbeispiele beschränkt.

Es zeigt:
- Fig. 1: ein erfindungsgemäßes Gehäuse in Explosionsdarstellung,
- Fig. 2: ein weiteres erfindungsgemäßes Gehäuse in einer Ansicht von vorn,
- Fig. 3: das Gehäuse aus Figur 2 in einer Ansicht von hinten,
- Fig. 4: eine Detail-Schnittansicht des Gehäuses gemäß Fig. 2 mit einem Schnitt durch eine Klammer,
- Fig. 5: eine Einzelansicht einer Klammer mit einem Funktionsaufbau aus Befestigungsvorrichtung bei einem Gehäuse gemäß Figur 2,
- Fig. 6: einen erfindungsgemäßen Gebrauch der Klammer gemäß Figur 5 bei einem erfindungsgemäßen Gehäuse,
- Fig. 7: ein weiteres erfindungsgemäßes Gehäuse mit einer ersten Anordnung von Klammern mit unterschiedlichen Funktionsaufbauten und
- Fig. 8: das Gehäuse gemäß Figur 7 mit einer zweiten Anordnung der in Figur 7 gezeigten Klammern.

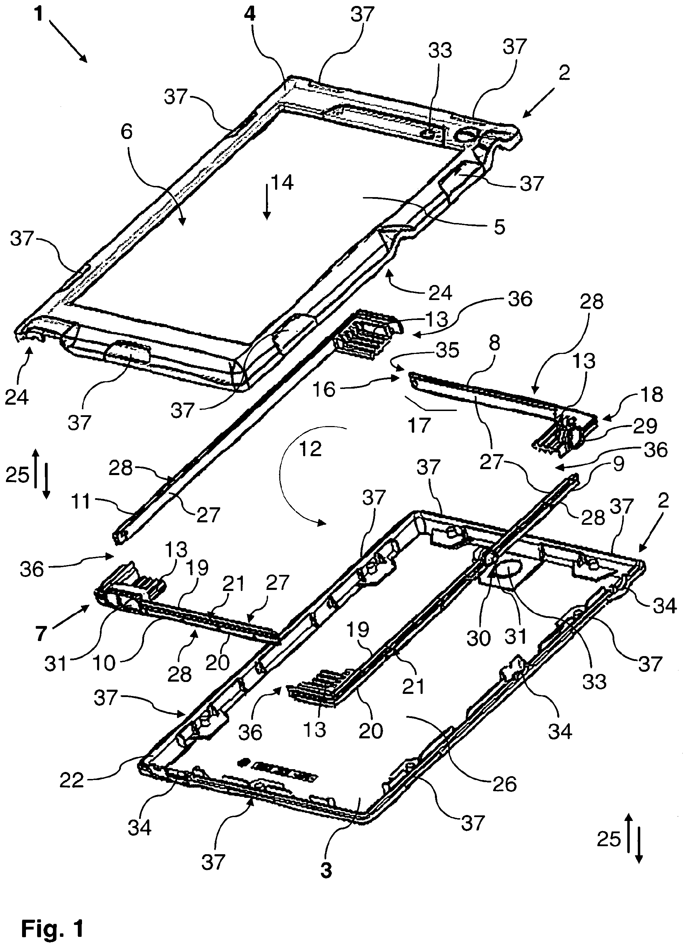

Fig. 1 zeigt ein im Ganzen mit 1 bezeichnetes Gehäuse für ein elektronisches Gerät, welches zwei Gehäuseschalen 2 aufweist. Eine der zwei Gehäuseschalen 2 ist hierbei als Unterschale 3 und die andere Gehäuseschale 2 als Oberschale 4 ausgebildet.

Die Oberschale 4 weist hierbei eine Displayschutzfolie 5 auf, die ein Sicht- und/oder Betätigungsfenster 6 nach außen verschließt.

Zwischen die Oberschale 4 und die Unterschale 3 ist eine umlaufende Dichtung 7 eingelegt, die erfindungsgemäß aus vier Dichtungssegmenten 8, 9, 10, 11 zusammengesetzt ist. Die Dichtungssegmente 8, 9, 10, 11 sind hierbei in einer Verlaufsrichtung 12 der Dichtung 7 aneinandergesetzt, um ein Rechteck zu beschreiben. Jedes Dichtungssegment 8, 9, 10, 11 bildet hierbei eine Kante des Rechtecks.

An jedem Dichtungssegment 8, 9, 10, 11 ist eine Auflagematte 13 ausgebildet, die ein eingelegtes elektronisches Gerät 15 - beispielsweise ein Tablet oder ein Smartphone - entgegen einer Betätigungsrichtung 14, die durch das Sicht- und/oder Betätigungsfenster 7 vorgegeben ist, fixiert.

Die Auflagematten 13 der Dichtungssegmente 8 und 10 und die Auflagematten 13 der Dichtungssegmente 9 und 11 sind jeweils zueinander übereinstimmend ausgebildet.

An ihren freien Enden 16 weisen die Dichtungssegmente 8, 9, 10, 11 jeweils einen Abschnitt 17 mit einem gleichbleibenden Querschnitt auf.

Die Auflagematten 13 sind jeweils an den in Bezug auf die freien Enden 16 gegenüberliegenden Enden 18 der Dichtungssegmente 8, 9, 10, 11 ausgebildet.

An jedem der Dichtungssegmente 8, 9, 10, 11 sind eine Dichtlippe 19 und eine Dichtfläche 20 ausgebildet, die durch eine Nut 21 voneinander getrennt sind. Somit sind eine umlaufende Dichtlippe 19 und ebenfalls umlaufende Dichtfläche 20 ausgebildet, die durch eine umlaufende Nut 21 (jeweils in Verlaufsrichtung 12) voneinander getrennt sind.

Die Dichtfläche 20 wird hierbei in Gebrauchsstellung gegen eine Anlagefläche 22 an der Unterschale 3 radial, also quer zu einer Zusammensetzrichtung 23 der Gehäuseschalen 2, gepresst und dichtet somit die Unterschale 3 ab. Die Dichtlippe 19 wird in gleicher Weise gegen eine an der Oberschale 4 ausgebildete, radial orientierte und umlaufende Anlagefläche 24 gepresst. Die Dichtfläche 20 ist breiter als die Dichtlippe 19 und hält daher stärker an der Unterschale 3 als die Dichtlippe 19 an der Oberschale 4. Beim Öffnen des Gehäuses 1 bleibt die Dichtung 7 daher in der Unterschale 3.

Die Gehäuseschalen 2 sind jeweils derart hinterschnittfrei ausgebildet, dass sie in Spritzgussfertigung eine Entformung in einer Entformungsrichtung 25 erlauben, die mit der Zusammensetzrichtung 23 zusammenfällt. Die Entformungsrichtung 25 der Unterschale 4 fällt somit mit einer durch einen rückseitigen Boden 26 des Gehäuses 1 vorgegebenen Richtung zusammen. Die Entformungsrichtung 25 der Oberschale 4 fällt dagegen mit einer durch das Sicht- und/oder Betätigungsfenster 6 vorgegebenen Richtung zusammen.

Hierbei sind die nötigen Hinterschnitte zur Bildung eines funktionsfähigen Gehäuses 1 in die Dichtungssegmente 8, 9, 10, 11 verlegt, wie noch genauer beschrieben wird.

Die Dichtungselemente 8, 9, 10, 11 sind jeweils aus einer Hartkomponente 27 und einer Weichkomponente 28 zusammengesetzt. Die Hartkomponente 27 und die Weichkomponente 28 sind jeweils ringförmig umlaufend ausgebildet.

Die Hartkomponente 27 ist hierbei streifenförmig ausgebildet und stützt die Weichkomponente 28 von innen ab.

In der Dichtung 7 sind in den Hartkomponenten 27 an unterschiedlichen Stellen ringförmige Schnittstellen- und/oder Betätigungsöffnungen 29, 30, 31 ausgebildet. Dies erfordert entsprechende Hinterschnitte zur Ausbildung der Ringform.

Die Schnittstellen- und/oder Betätigungsöffnung 29 ist beispielsweise für einen Klinkenstecker ausgebildet und durch einen Stopfen verschließbar, der die Hartkomponente 27 an dieser Stelle abdichtet.

Die Schnittstellen- und/oder Betätigungsöffnung 30 trägt einen Betätigungsstößel 32, um Tasten an einem eingelegten elektronischen Gerät 15 von außen zu betätigen.

Die Schnittstellen- und/oder Betätigungsöffnung 31 ist beispielsweise für einen (Micro-)USB-Stecker ausgebildet und ebenfalls verschließbar.

In der Unterschale 3 und/oder in der Oberschale 4 können Sichtfenster 33 für eine Kamera des elektronischen Geräts 15 ausgebildet sein.

Die Schnittstellen- und/oder Betätigungsöffnungen 29, 30, 31 sind in entsprechende Ausnehmungen 34 an den Gehäuseschalen 2 eingelegt.

An den freien Enden 16 der Dichtungssegmente 8, 9, 10, 11 münden die Hartkomponenten 28 jeweils in eine Zunge 35, die mit der Hartkomponente 28 des jeweils anschließenden Dichtungselements 8, 9, 10, 11 überlappt. Die zugehörigen Weichkomponenten 27 überlappen dagegen nicht, sondern stoßen an den Trennstellen 36 aneinander.

Die Unterschale 3 und die Oberschale 4 sind an Befestigungsstellen 37 durch hier nicht weiter dargestellte und zu den übrigen Bildern genauer erläuterte Klammern 38 zusammengehalten. Die Klammern 38 sind jeweils auf die Gehäuseschalen 2 seitlich oder von der Seite her aufgeclipst.

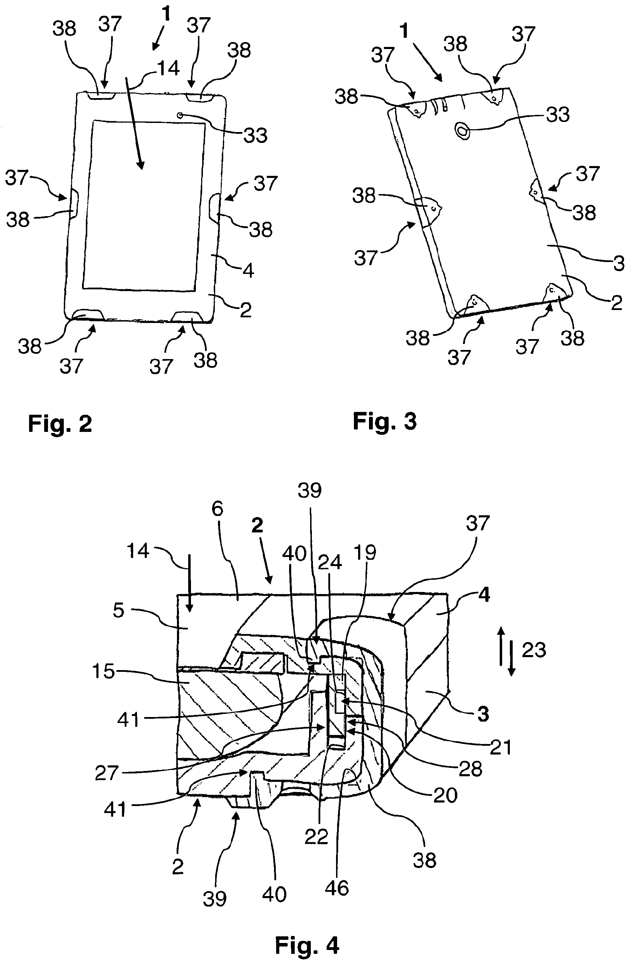

Fig. 2 bis 4 zeigen ein weiteres erfindungsgemäßes Gehäuse 1. Konstruktiv und/oder funktionell zu dem Ausführungsbeispiel nach Fig. 1 gleichartige oder identische Bauteile und Funktionseinheiten sind mit denselben Bezugszeichen bezeichnet und nicht gesondert beschrieben. Die Ausführungen zu der Fig. 1 gelten zu Fig. 2 bis 4 entsprechend.

In Fig. 4 ist eine der aufgeclipsten Klammern 38 in einer Schnittansicht gezeigt. Es ist die U- oder C-Form der Klammer 38 ersichtlich. An den freien Enden 39 ist jeweils eine nach innen abragende Rastnase 40 ausgebildet, die in eine korrespondierende Rastnut 41 in der jeweiligen Gehäuseschale 2 formschlüssig eingreift.

Die Befestigungsstellen 37 sind identisch zueinander ausgebildet. Die innenliegenden Clipsseiten 46 der Klammern 38 sind ebenfalls identisch ausgebildet, so dass alle Klammern 38 an allen Befestigungsstellen 37 befestigbar sind.

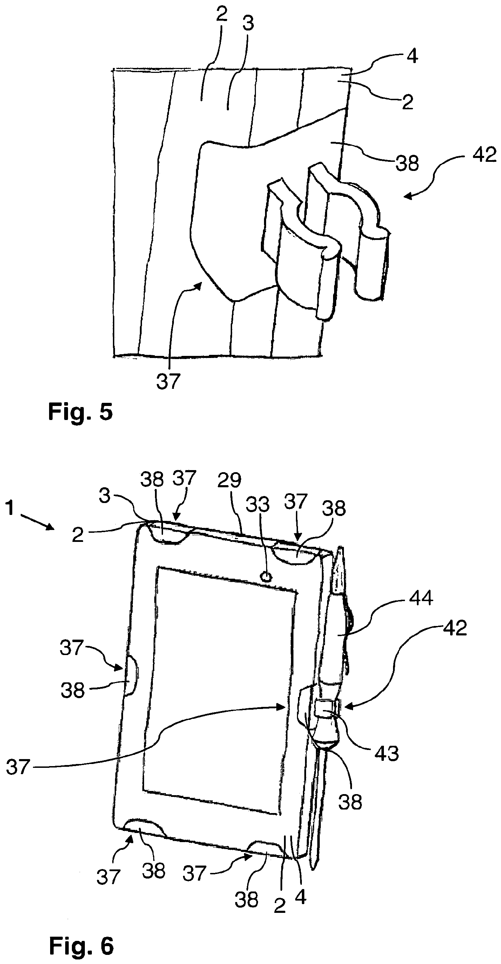

Fig. 5 und Fig. 6 zeigen ein weiteres Ausführungsbeispiel eines erfindungsgemäßen Gehäuses 1. Konstruktiv und/oder funktionell zu dem Ausführungsbeispiel nach Fig. 1 oder 2 bis 4 gleichartige oder identische Bauteile und Funktionseinheiten sind mit denselben Bezugszeichen bezeichnet und nicht gesondert beschrieben. Die Ausführungen zu den Fig. 1 bis 4 gelten daher zu Fig. 5 und 6 entsprechend.

Fig. 5 zeigt eine Klammer 38 mit einem Funktionsaufbau 42, der hier als Befestigungsvorrichtung 43 für ein stabförmiges Instrument 44, beispielsweise einen Messfühler oder einen Stift, ausgebildet ist. Die Klammer 38 nach Fig. 5 ist an jede Befestigungsstelle 37 in Fig. 6 aufclipsbar. Die Lage des Instruments 44 am Gehäuse 1 ist somit veränderbar.

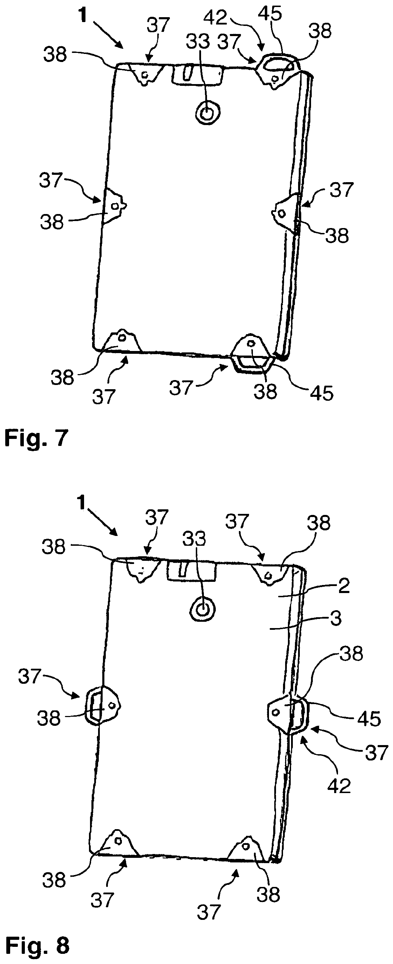

Fig. 7 und Fig. 8 zeigen ein weiteres Ausführungsbeispiel eines erfindungsgemäßen Gehäuses 1, das identisch zu Fig. 5 und 6 ausgebildet sein kann. Konstruktiv und/oder funktionell zu den Ausführungsbeispiel nach Fig. 1 bis 6 gleichartige oder identische Bauteile und Funktionseinheiten sind mit denselben Bezugszeichen bezeichnet und nicht gesondert beschrieben. Die Ausführungen zu den Fig. 1 bis 6 gelten daher zu Fig. 7 und 8 entsprechend.

In Fig. 7 und 8 ist ersichtlich, dass Klammern 38 mit einem Funktionsaufbau 42 in Form einer Trageöse 45 versehen sein können. Durch die Umsetzbarkeit der Klammern 38 sind die Trageösen 45 an beliebigen Befestigungsstellen 37 anordenbar.

Somit bilden das Gehäuse 1, die Klammern 38 ohne Funktionsaufbau, die Klammern 38 mit Befestigungsvorrichtung 43 und die Klammern 38 mit Trageöse 45 einen Baukasten für ein Gehäuse. Bei einem Gehäuse 1 für ein elektronisches Gerät 15 wird vorgeschlagen, zwischen einer Unterschale 3 und einer Oberschale 4 eine umlaufende Dichtung 7 auszubilden, die aus wenigstens zwei aneinandergereihten Dichtungssegmenten 8, 9, 10, 11 gebildet ist, und wahlweise die Unterschale 3 und die Oberschale 4 ohne Hinterschnitte auszubilden und wahlweise mit clipsbaren, umsetzbaren Klammern 38 zusammenzuhalten.

### Bezugszeichenliste

- 1: Gehäuse
- 2: Gehäuseschale
- 3: Unterschale
- 4: Oberschale
- 5: Displayschutzfolie
- 6: Sicht- und/oder Betätigungsfenster
- 7: Dichtung
- 8: Dichtungssegment
- 9: Dichtungssegment
- 10: Dichtungssegment
- 11: Dichtungssegment
- 12: Verlaufsrichtung
- 13: Auflagematte
- 14: Betätigungsrichtung
- 15: elektronisches Gerät
- 16: Ende
- 17: Abschnitt
- 18: gegenüberliegendes Ende
- 19: Dichtlippe
- 20: Dichtfläche
- 21: Nut
- 22: Anlagefläche
- 23: Zusammensetzrichtung
- 24: Anlagefläche
- 25: Entformungsrichtung
- 26: Boden
- 27: Hartkomponente
- 28: Weichkomponente
- 29: Schnittstellen- und/oder Betätigungsöffnung
- 30: Schnittstellen- und/oder Betätigungsöffnung
- 31: Schnittstellen- und/oder Betätigungsöffnung
- 32: Betätigungsstößel
- 33: Sichtfenster
- 34: Ausnehmung
- 35: Zunge
- 36: Trennstelle
- 37: Befestigungsstelle
- 38: Klammer
- 39: Ende
- 40: Rastnase
- 41: Rastnut
- 42: Funktionsaufbau
- 43: Befestigungsvorrichtung
- 44: Instrument
- 45: Trageöse
- 46: Clipsseite

## Patentansprüche

1. Gehäuse (1) für ein elektronisches Gerät (15), mit zwei Gehäuseschalen (2), wobei eine erste Gehäuseschale (2) als eine Unterschale (3) und eine zweite Gehäuseschale (2) als eine auf die Unterschale (3) aufsetzbare Oberschale (4) ausgebildet sind, wobei in der Oberschale (4) ein mit einer Displayschutzfolie (5) verschlossenes Sicht- und/oder Betätigungsfenster (6) ausgebildet ist und wobei eine Verbindung zwischen den Gehäuseschalen (2) durch eine umlaufende Dichtung (7) abgedichtet ist, **dadurch gekennzeichnet, dass** die Dichtung (7) aus wenigstens zwei voneinander separaten Dichtungssegmenten (8, 9, 10, 11) zusammengesetzt ist, die in einer Verlaufsrichtung der umlaufenden Dichtung (7) aneinandergesetzt sind.

2. Gehäuse (1) nach Anspruch 1, **dadurch gekennzeichnet, dass** die umlaufende Dichtung (7) Kanten eines Rechtecks beschreibt und/oder dass die Dichtungssegmente (8, 9, 10, 11) in aneinandergesetzter Anordnung jeweils eine Kante des oder eines Rechtecks beschreiben.

3. Gehäuse (1) nach einem der vorangehenden Ansprüche, **dadurch gekennzeichnet, dass** an wenigstens einem Dichtungssegment (8, 9, 10, 11) eine Auflagematte (13) zur Fixierung eines eingelegten elektronischen Geräts (15) in einer durch das Sicht- und/oder Betätigungsfenster (6) vorgegebenen Betätigungsrichtung (14) ausgebildet ist und/oder dass an wenigstens zwei Dichtungssegmenten (8, 9, 10, 11) übereinstimmende Auflagematten (13) ausgebildet sind.

4. Gehäuse (1) nach einem der vorangehenden Ansprüche, **dadurch gekennzeichnet, dass** die wenigstens zwei Dichtungssegmente (7) jeweils an einem Ende (16) einen Abschnitt (17) mit gleichbleibenden Querschnitt aufweisen, insbesondere wobei die oder eine Auflagematte (13) an einem gegenüberliegenden Ende jedes Dichtungssegments (8, 9, 10, 11) ausgebildet sind.

5. Gehäuse (1) nach einem der vorangehenden Ansprüche, **dadurch gekennzeichnet, dass** die Dichtung (7) eine umlaufende Dichtlippe (7) und eine umlaufende Dichtfläche (7) aufweist, insbesondere wobei die Dichtlippe (19) und die Dichtfläche (20) durch eine umlaufende Nut (21) voneinander getrennt sind, und/oder dass die Dichtung (7), insbesondere die Dichtlippe (19) und/oder die Dichtfläche (20), quer zu einer Zusammensetzrichtung (23) der Gehäuseschalen (2) abdichtet und/oder an einer quer zu der oder einer Zusammensetzrichtung (23) orientierten Anlagefläche (22) wenigstens einer Gehäuseschale (2) anliegt.

6. Gehäuse (1) für ein elektronisches Gerät nach einem der vorangegangenen Ansprüche, **dadurch gekennzeichnet, dass** wenigstens eine Gehäuseschale (2), insbesondere die Unterschale (3) und/oder die Oberschale (4), hinterschnittfrei ausgebildet ist.

7. Gehäuse (1) nach einem der vorangehenden Ansprüche, **dadurch gekennzeichnet, dass** die Oberschale (4) in Bezug auf eine durch das Sicht- und/oder Betätigungsfenster (6) vorgegebene Entformungsrichtung (25) hinterschnittfrei ausgebildet ist und/oder dass die Unterschale (3) in Bezug auf eine durch einen rückseitigen Boden (26) vorgegebene Entformungsrichtung (25) hinterschnittfrei ausgebildet ist.

8. Gehäuse (1) nach einem der vorangehenden Ansprüche, **dadurch gekennzeichnet, dass** die Dichtungssegmente (8, 9, 10, 11) jeweils mehrkomponentig mit einer Hartkomponente (27) und einer Weichkomponente (28) ausgebildet sind.

9. Gehäuse (1) nach einem der vorangehenden Ansprüche, **dadurch gekennzeichnet, dass** wenigstens ein Dichtungssegment (8, 9, 10, 11), insbesondere mit seiner Hartkomponente (27), eine ringförmige Schnittstellen- und/oder Betätigungsöffnung (29, 30, 31) bildet, insbesondere wobei wenigstens eine der Gehäuseschalen (2) eine korrespondierende Ausnehmung (34) aufweist/aufweisen, welche die Schnittstellen- und/oder Betätigungsöffnung (29, 30, 31) aufnimmt.

10. Gehäuse (1) nach einem der vorangehenden Ansprüche, **dadurch gekennzeichnet, dass** die Hartkomponenten (27) von aneinandergesetzten Dichtungssegmenten (8, 9, 10, 11) in der Verlaufsrichtung (12) überlappend ausgebildet sind und/oder dass die Weichkomponenten (28) von aneinandergesetzten Dichtungssegmente (8, 9, 10, 11) in der Verlaufsrichtung (12) aneinanderstoßend ausgebildet sind.

11. Gehäuse (1) für ein elektronisches Gerät, nach einem der vorangegangenen Ansprüche, **dadurch gekennzeichnet, dass** die Gehäuseschalen (2) mit wenigstens einer aufclipsbaren Klammer (38) zusammengehalten sind.

12. Gehäuse (1) nach Anspruch 11, **dadurch gekennzeichnet, dass** die Klammer (38) U- oder C-förmig ausgebildet ist und/oder an wenigstens einem freien Ende (39) eine ins Innere der U- oder C-Form abragende Rastnase (40) aufweist, insbesondere an zwei freien Enden (39) jeweils eine ins Innere der U- oder C-Form abragende Rastnase (40).

13. Gehäuse (1) nach Anspruch 12, **dadurch gekennzeichnet, dass** an wenigstens einer der Gehäuseschalen (2) eine zu der oder einer Rastnase (40) korrespondierende Rastnut (41) ausgebildet ist.

14. Gehäuse (1) nach einem der Ansprüche 11 bis 13, **dadurch gekennzeichnet, dass** an der Klammer (38) ein von den Gehäuseschalen (2) in Gebrauchsposition abstehender Funktionsaufbau (42), insbesondere eine Trageöse (45) und/oder eine Befestigungsvorrichtung (43) für ein stabförmiges Instrument (44), vorzugsweise für einen Messfühler, ausgebildet ist.

15. Gehäuse (1) nach einem der Ansprüche 11 bis 14, **dadurch gekennzeichnet, dass** an wenigstens einer der zwei Gehäuseschalen (2) wenigstens zwei identische Befestigungsstellen (37) für jeweils eine Klammer (38) ausgebildet sind und/oder dass zwei Klammern (38) zum Zusammenhalten der Gehäuseschalen (2) vorhanden sind, die voneinander abweichende Funktionsaufbauten (42) aufweisen und die auf einer die Gehäuseschalen (2) kontaktierenden Clipsseite (46) übereinstimmend ausgebildet sind, insbesondere auf dieselbe Befestigungsstelle (37) passen.

## Claims

1. Housing (1) for an electronic device (15), having two housing shells (2), wherein a first housing shell (2) is constructed as a lower shell (3) and a second housing shell (2) is constructed as an upper shell (4) which can be positioned on the lower shell (3), wherein a viewing and/or activation window (6) which is closed with a display protection film (5) is constructed in the upper shell (4), and wherein a connection between the housing shells (2) is sealed by a peripheral seal (7), **characterized in that** the seal (7) is composed of at least two sealing segments (8, 9, 10, 11) which are separate from each other and which are placed against each other in an extent direction of the peripheral seal (7).

2. Housing (1) according to Claim 1, **characterized in that** the peripheral seal (7) describes edges of a rectangle and/or **in that** the sealing segments (8, 9, 10, 11) in a mutually abutting arrangement each describe an edge of the or a rectangle.

3. Housing (1) according to any one of the preceding claims, **characterized in that** there is constructed in at least one sealing segment (8, 9, 10, 11) a support mat (13) for fixing an inserted electronic device (15) in an activation direction (14) predetermined by the viewing and/or activation window (6) and/or **in that** support mats (13) which correspond are constructed at least on two sealing segments (8, 9, 10, 11).

4. Housing (1) according to any one of the preceding claims, **characterized in that** the at least two sealing segments (7) each have a portion (17) having a constant cross-section at an end (16), in particular wherein the or a support mat (13) is/are constructed at an opposite end of each sealing segment (8, 9, 10, 11).

5. Housing (1) according to any one of the preceding claims, **characterized in that** the seal (7) has a peripheral sealing lip (7) and a peripheral sealing face (7), in particular wherein the sealing lip (19) and the sealing face (20) are separated from each other by a peripheral groove (21) and/or **in that** the seal (7), in particular the sealing lip (19) and/or the sealing face (20), seals transversely relative to an assembly direction (23) of the housing shells (2) and/or abuts an abutment face (22) of at least one housing shell (2) which is orientated transversely relative to the or an assembly direction (23).

6. Housing (1) for an electronic device according to any one of the preceding claims, **characterized in that** at least one housing shell (2), in particular the lower shell (3) and/or the upper shell (4), is constructed without undercuts.

7. Housing (1) according to any one of the preceding claims, **characterized in that** the upper shell (4) is constructed without undercuts with respect to a mold removal direction (25) which is predetermined by the viewing and/or activation window (6) and/or **in that** the lower shell (3) is constructed without undercuts with respect to a mold removal direction (25) which is predetermined by a rear-side base (26).

8. Housing (1) according to any one of the preceding claims, **characterized in that** the sealing segments (8, 9, 10, 11) are constructed with multiple components with a hard component (27) and a soft component (28), respectively.

9. Housing (1) according to any one of the preceding claims, **characterized in that** at least one sealing segment (8, 9, 10, 11) forms, in particular with the hard component (27) thereof, an annular interface opening and/or activation opening (29, 30, 31), in particular wherein at least one of the housing shells (2) has/have a corresponding recess (34) which receives the interface and/or activation opening (29, 30, 31).

10. Housing (1) according to any one of the preceding claims, **characterized in that** the hard components (27) of sealing segments (8, 9, 10, 11) placed against each other are constructed so as to overlap in the extent direction (12) and/or **in that** the soft components (28) of sealing segments (8, 9, 10, 11) placed against each other are constructed so as to abut each other in the extent direction (12).

11. Housing (1) for an electronic device, according to any one of the preceding claims, **characterized in that** the housing shells (2) are held together with at least one clip-fitting clip (38).

12. Housing (1) according to Claim 11, **characterized in that** the clip (38) is constructed to be U-shaped or C-shaped and/or has at least at one free end (39) an engaging projection (40) which projects inside the U-shape or C-shape, in particular at two free ends (39) an engaging projection (40) which projects inside the U-shape or C-shape.

13. Housing (1) according to Claim 12, **characterized in that** an engaging groove (41) corresponding to the or an engaging projection (40) is constructed in at least one of the housing shells (2).

14. Housing (1) according to any one of the Claims 11 to 13, **characterized in that** a functional structure (42) which projects from the housing shells (2) in a position for use is constructed on the clip (38), in particular a carrying lug (45) and/or a fixing device (43) for a rod-like instrument (44), preferably for a measuring sensor.

15. Housing (1) according to any one of Claims 11 to 14, **characterized in that** at least two identical fixing locations (37) for a clip (38) are constructed on at least one of the two housing shells (2), respectively, and/or **in that** two clips (38) are present in order to hold together the housing shells (2) which have functional fittings (42) which differ from each other and which are constructed so as to correspond to each other on a clip-fit side (46) which contacts the housing shells (2), in particular which fit at the same fixing location (37).

## Revendications

1. Boîtier (1) pour un appareil électronique (15), avec deux coques de boîtier (2), dans lequel une première coque de boîtier (2) est réalisée comme une coque inférieure (3) et une seconde coque de boîtier (2) est réalisée comme une coque supérieure (4) à placer sur la coque inférieure (3), dans lequel une fenêtre de visualisation et/ou d'actionnement (6) fermée avec un film de protection d'écran (5) est formée dans la coque supérieure (4) et dans lequel un assemblage entre les coques de boîtier (2) est rendu étanche par un joint d'étanchéité périphérique (7), **caractérisé en ce que** le joint d'étanchéité (7) est composé d'au moins deux segments de joint d'étanchéité (8, 9, 10, 11) séparés l'un de l'autre, qui sont posés l'un à la suite de l'autre dans une direction de tracé du joint d'étanchéité périphérique (7).

2. Boîtier (1) selon la revendication 1, **caractérisé en ce que** le joint d'étanchéité périphérique (7) décrit les côtés d'un rectangle et/ou **en ce que** les segments de joint d'étanchéité (8, 9, 10, 11) posés l'un à la suite de l'autre décrivent chacun un côté du ou d'un rectangle.

3. Boîtier (1) selon l'une quelconque des revendications précédentes, **caractérisé en ce qu'**un tapis de pose (13) est formé sur au moins un segment de joint d'étanchéité (8, 9, 10, 11) pour la fixation d'un appareil électronique introduit (15) dans une direction d'actionnement (14) prédéterminée par la fenêtre de visualisation et/ou d'actionnement (6) et/ou **en ce que** des tapis de pose correspondants (13) sont formés sur au moins deux segments de joint d'étanchéité (8, 9, 10, 11).

4. Boîtier (1) selon l'une quelconque des revendications précédentes, **caractérisé en ce que** lesdits au moins deux segments de joint d'étanchéité (7) présentent chacun à une extrémité (16) une partie (17) de section transversale constante, en particulier dans lequel le ou un tapis de pose (13) est formé à une extrémité opposée de chaque segment de joint d'étanchéité (8, 9, 10, 11).

5. Boîtier (1) selon l'une quelconque des revendications précédentes, **caractérisé en ce que** le joint d'étanchéité (7) présente une lèvre d'étanchéité périphérique (7) et une face d'étanchéité périphérique (7), en particulier dans lequel la lèvre d'étanchéité (19) et la face d'étanchéité (20) sont séparées l'une de l'autre par une rainure périphérique (21), et/ou **en ce que** le joint d'étanchéité (7), en particulier la lèvre d'étanchéité (19) et/ou la face d'étanchéité (20), assure l'étanchéité transversalement à une direction d'assemblage (23) des coques de boîtier (2) et/ou s'applique sur une face d'appui (22) d'au moins une coque de boîtier (2) orientée transversalement à la ou à une direction d'assemblage (23).

6. Boîtier (1) pour un appareil électronique selon l'une quelconque des revendications précédentes, **caractérisé en ce qu'**au moins une coque de boîtier (2), en particulier la coque inférieure (3) et/ou la coque supérieure (4), est réalisée sans contre-dépouille.

7. Boîtier (1) selon l'une quelconque des revendications précédentes, **caractérisé en ce que** la coque supérieure (4) est réalisée sans contre-dépouille par rapport à une direction de démoulage (25) prédéterminée par la fenêtre de visualisation et/ou d'actionnement (6) et/ou **en ce que** la coque inférieure (3) est réalisée sans contre-dépouille par rapport à une direction de démoulage (25) prédéterminée par un fond arrière (26).

8. Boîtier (1) selon l'une quelconque des revendications précédentes, **caractérisé en ce que** les segments de joint d'étanchéité (8, 9, 10, 11) sont respectivement formés en plusieurs composants avec un composant dur (27) et un composant souple (28).

9. Boîtier (1) selon l'une quelconque des revendications précédentes, **caractérisé en ce qu'**au moins un segment de joint d'étanchéité (8, 9, 10, 11) forme, en particulier avec son composant dur (27), une ouverture annulaire d'interface et/ou d'actionnement (29, 30, 31), en particulier dans lequel au moins une des coques de boîtier (2) présente/présentent un évidement correspondant (34), qui comporte l'ouverture d'interface et/ou d'actionnement (29, 30, 31).

10. Boîtier (1) selon l'une quelconque des revendications précédentes, **caractérisé en ce que** les composants durs (27) de segments de joint d'étanchéité posés l'un à la suite de l'autre (8, 9, 10, 11) sont réalisés avec un recouvrement dans la direction du tracé (12) et/ou **en ce que** les composants souples (28) de segments de joint d'étanchéité posés l'un à la suite de l'autre (8, 9, 10, 11) sont réalisés en mode d'assemblage bout à bout dans la direction du tracé (12).

11. Boîtier (1) pour un appareil électronique selon l'une quelconque des revendications précédentes, **caractérisé en ce que** les coques de boîtier (2) sont solidarisées avec au moins une attache à clipser (38).

12. Boîtier (1) selon la revendication 11, **caractérisé en ce que** l'attache (38) est réalisée en forme de U ou de C et/ou présente à au moins une extrémité libre (39) un ergot d'encliquetage (40) pénétrant à l'intérieur de la forme en U ou en C, en particulier présente à deux extrémités libres (39) chaque fois un ergot d'encliquetage (40) pénétrant à l'intérieur de la forme de U ou en C.

13. Boîtier (1) selon la revendication 12, **caractérisé en ce qu'**une rainure d'encliquetage (41) correspondant au ou à un ergot d'encliquetage (40) est formée sur au moins une des coques de boîtier (2).

14. Boîtier (1) selon l'une quelconque des revendications 11 à 13, **caractérisé en ce qu'**un élément fonctionnel (42) saillant sur les coques de boîtier (2) dans la position d'utilisation, en particulier un oeillet de support (45) et/ou un dispositif de fixation (43) pour un instrument en forme de barre (44), de préférence pour un capteur de mesure, est formé sur l'attache (38).

15. Boîtier (1) selon l'une quelconque des revendications 11 à 14, **caractérisé en ce qu'**au moins deux points de fixation identiques (37) chacun pour une attache (38) sont formés sur au moins une des deux coques de boîtier (2) et/ou **en ce qu'**il se trouve deux attaches (38) pour solidariser les coques de boîtier (2), qui présentent des éléments fonctionnels (42) s'écartant l'un de l'autre et qui sont formées de façon concordante sur le côté du clips (46) contactant les coques de boîtier (2), en particulier qui s'ajustent sur le même point de fixation (37).
